## Europäisches Patentamt

## European Patent Office

## Office européen des brevets

(19)

(11) Publication number: **0 075 421**
**A1**

(12)
# EUROPEAN PATENT APPLICATION

(21) Application number: 82304769.1

(22) Date of filing: 10.09.82

(51) Int. Cl.³: **C 08 F 10/00,** C 08 F 4/22, C 08 F 4/34

(30) Priority: **21.09.81 US 304139**

(71) Applicant: **MOBIL OIL CORPORATION, 150 East 42nd Street, New York New York 10017 (US)**

(43) Date of publication of application: **30.03.83 Bulletin 83/13**

(72) Inventor: **Chester, Arthur Warren, 517 Country Club Drive, Cherry Hill New Jersey 08003 (US)**

(84) Designated Contracting States: **BE DE FR GB IT NL SE**

(74) Representative: **Cooper, John Anthony et al, Mobil Court 3 Clements Inn, London WC2A 2EB (GB)**

(54) Catalyst and process for polymerizing olefins.

(57) A catalyst composition for the polymerization of olefins, particularly the copolymerization of ethylene with at least one $C_3$-$C_7$ alpha olefin, comprises a porous crystalline siliceous material containing in catalytically active form 0.05 to 3 weight percent chromium, 1.5 to 9 weight percent titanium and up to 2.5 weight percent fluorine.

## CATALYST AND PROCESS FOR POLYMERIZING OLEFINS

This invention relates to a catalyst and process for the polymerization of olefins and in particular for the copolymerization of ethylene with other copolymerizable monomers to produce ethylene copolymers, especially with low (0.900 to 0.925 gm/cc) and medium (0.926 to 0.940 gm/cc) density.

Low and medium density ethylene polymers are commercially more significant than high density (greater than 0.940 gm/cc) ethylene polymers. The low density polymers are usually made commercially by homopolymerizing ethylene with free radical catalysts under high pressure (greater than about 15,000 psi) in tubular and stirred reactors, in the absence of solvents. The medium density polymers can also be made commercially by the high pressure process, or by blending high pressure polyethylene with high density polyethylene made in a low pressure process with transition metal based catalysts.

The preparation of ethylene polymers in the absence of solvents under low pressures (about 40-350 psi) in a fluid bed reactor, using various supported chromium containing catalysts is disclosed in U.S. Patent Nos. 3,023,203; 3,687,920; 3,704,287; 3,709,853, Belgium Patent No. 773,050 and Netherlands Patent Application 72-10881. These publications also disclose that the ethylene polymers produced may be ethylene homopolymers or copolymers of ethylene and one or more other alpha olefins. The disclosures in these patent publications are, however, primarily concerned with the preparation of high density ethylene polymers. Because of the technical difficulties involved, it has not been possible, by the techniques set forth in the above cited prior art to provide a commercially useful process for the production of low and medium density ethylene polymers in a low pressure fluid bed process. In order to provide such a useful process, the catalyst employed must be one which can, simultaneously, copolymerize ethylene with other alpha olefins so as to provide the desired density range in the copolymer product; provide such a high degree of productivity that the catalyst residues in the polymer product are so small as to allow them to remain therein, and thus avoid the need for catalyst removal steps; provide a polymer product which can be readily molded in a variety of molding applications, i.e., provide a polymer product having a relatively wide melt index range; provide a polymer product which has a relatively small low molecular weight fraction content so as to comply with government standards for extractables (in U.S.A. less than 5.5 weight percent at 50°C in n-hexane) for food contact applications; and be used in solid form to provide such copolymer products under the operating conditions which can be readily achieved in a commercial sized fluid bed reactor.

U.S. Patent No. 4,011,382 describes a catalyst system capable of producing low density ethylene copolymers. These ethylene copolymers have a density of about 0.900 to 0.940 and a melt index of greater than 0.0 to at least about 2.0, have a relatively low n-hexane extractables content and have an acceptable residual catalyst content. This patent shows production of such polymers at relatively high productivities in a fluid bed process by polymerizing ethylene with one or more $C_3$ to $C_6$ alpha olefins in the presence of a catalyst which has an amorphous substrate of specific particle size and which contains specific amounts of chromium, titanium and fluorine.

The present invention provides a catalyst composition for use in olefin polymerization, and in particular the low pressure copolymerization of ethylene with at least one other low (e.g. $C_3$ to $C_7$) alpha olefin, comprising a substrate formed of a porous crystalline siliceous material, preferably having a particle size of about 0.01 to 200 microns, and having associated therewith, in a catalytically active form: -

0.05 to 3.0, preferably 0.2 to 1.0, weight percent chromium (calculated as Cr);

1.5 to 9.0, preferably 4.0 to 7.0, weight percent titanium (calculated as Ti), and

greater than 0 to 2.5, preferably 0.1 to 1.0, weight percent fluorine (calculated as F).

The invention also provides a process for polymerizing olefins and, in particular, for copolymerizing ethylene at low pressure with at least one low (e.g. $C_3$ to $C_7$) alpha olefin.

The chromium compounds which may be used include $CrO_3$ or any compound of chromium which is ignitable to $CrO_3$ under the activation conditions employed. At least a portion of the chromium in the supported, activated catalyst must be in the hexavalent state. Chromium compounds other than $CrO_3$ which may be used are disclosed in U.S. Patent Nos. 2,825,721 and 3,622,521 and include chromic acetyl acetonate, chromic nitrate, chromic acetate, chromic chloride, chromic sulfate, and ammonium chromate. Water soluble compounds of chromium, such as $CrO_3$, are the preferred compounds for use in depositing the chromium compound on the support from a solution of the compound. However, organic solvent soluble chromium compounds may also be used.

The titanium compounds which may be used include all those which are ignitable to $TiO_2$ under the activation conditions employed, and include those disclosed in U.S. Patent No. 3,622,521 and Netherlands Patent Application 72-10881. These compounds include those having the structures $(R')_n Ti(OR')_m$ and $(RO)_m Ti(OR')_n$ where m is 1, 2, 3 or 4; n is 0, 1, 2 or 3 and m+n=4, and $TiX_4$ where:

R is a $C_1$ to $C_{12}$ alkyl, aryl or cycloalkyl group, and combinations thereof, such as aralkyl and alkaryl;

R' is R, cyclopentadienyl, and $C_2$ to $C_{12}$ alkenyl groups, such as ethenyl, propenyl, isopropenyl and butenyl; and

X is chlorine, bromine, fluorine or iodine.

The titanium compounds would thus include titanium tetrachloride, titanium tetraisopropoxide and titanium tetrabutoxide. The titanium compounds are conveniently deposited on the support from a hydrocarbon solvent solution thereof.

The titanium (as Ti) is present in the catalyst, with respect to the Cr (as Cr), in a mol ratio of 0.5 to 180, and preferably of 4 to 35.

The fluorine compounds which may be used include HF, or any compound of fluorine which will yield HF under the activation conditions employed. Fluorine compounds other than HF which may be used are disclosed in Netherlands Patent Application 72-10881. These compounds include ammonium hexafluorosilicate, ammonium tetrafluoroborate, and ammonium hexfluorotitanate. The fluorine compounds are conveniently deposited on the support from an aqueous solution thereof, or by dry blending the solid fluorine compounds with the other components of the catalyst prior to activation.

The substrate for the catalyst system of this invention is a porous crystalline siliceous material. One excellent source of such materials is the highly siliceous zeolite and zeolite like materials. These materials will be hereinafter referred to collectively as zeolites regardless of whether they possess all or only some of the properties generally associated with zeolites. The zeolite substrates useful in this invention are those having a pore system large enough to admit the comonomers sought to be polymerized and to permit egress of the copolymers so produced.

Zeolites of the A and erionite types have pore systems with openings sufficiently large to admit straight chain hydrocarbons. Thus any linear alpha olefin is provided ingress to the internal surface of such small pored zeolites. However the copolymers which are produced desirously have a branched chain configuration which will severely limit their diffusivity out of the zeolite's pore structure. Thus small pored zeolites, i.e. those having a pore opening of up to about 5 Angstroms, would appear to have small utility at least as far as their being suitable supports for these catalysts on their internal surface. However, small particles of small pored zeolites having sufficient external surface area might be suited to use as a catalyst substrate for producing branch chain copolymers.

Of greater utility are those zeolites which have a pore system which is large enough to permit ingress of the monomeric alpha olefins sought to be copolymerized and to permit egress of the predominantly linear, but somewhat branched copolymer product produced. These zeolites generally have pore systems having effective diameters of at least about 6 Angstroms and are exemplified by materials having the topology of for example:  mordenite, ZSM-5, ZSM-11, ZSM-12, ZSM-20, ZSM-23, ZSM-35, ZSM-38, zeolite Y, ferrierite, zeolitex, clinoptilolite, and ZSM-4 (zeolite omega).

This last mentioned group of zeolites is itself subdivided into at least two classes:  those with topology having constrained pore systems which tend to limit ingress and egress to straight chain and methyl substituted hydrocarbons; and those with topology which permits ready access to these as well as substantially larger molecules.  The first of these types of zeolites is exemplified by ZSM-5 and ZSM-11 and the latter type is exemplified by ZSM-20 and zeolite Y.  ZSM-12 and mordenite are somewhat intermediate between these in effective size.

Since it is desirable to produce a substantially linear, but somewhat branched, low density ethylene polymer product and since acidity may tend to randomize the structure of olefin addition polymers, it is preferred to use as the catalyst substrate, a crystalline porous solid having low acidity.  It is well known that zeolites are generally acidic solids.  It is generally believed that this acidity is due to the presence in the crystal framework of tetra coordinated trivalent metals in addition to the silicon and oxygen constituents.  Thus, zeolites are often aluminosilicates which have acidity which appears to be directly proportional to their aluminum content.  If aluminum is substituted by other similar framework metals, such as iron, boron or gallium, similar acidity is found which may be different than that of aluminum, but which seems nevertheless to be proportional to the metal content.

Acidity of zeolites, being proportional to the non-silicon framework metal, can be reduced by reducing the quantity of non-silicon framework metal; that is by increasing the silicon to non-silicon framework metal (e.g. aluminum) ratio.  It is also well known to reduce zeolite acidity by other techniques, e.g. dealuminizing, coking, steaming and ion exchanging with alakali or other metals.  At least some zeolites can be made with vanishingly small quantities of aluminum or other non-silicon metal in the framework. ZSM-5, ZSM-11, ZSM-12, ZSM-20, ZSM-23, ZSM-35 and ZSM-38 are all examples of the types of zeolites which can be produced in a substantially silica form. To the extent necessary or desirable, two or more acidity reducing techniques can be used in combination with each other. For example, a low aluminum ZSM-5 can be further deacidified by sodium exchange. It will be recognized by those skilled in the zeolite art that the essential framework lattice structure of a crystalline zeolite is retained even when more or less aluminum occurs in the lattice composition, even with vanishingly small quantities of aluminum, and/or elements, such as iron, boron and/or gallium, substituted for aluminum. These variants of a particular zeolitic structure are referred to herein as "topologically" related, i.e. having substantially the same lattice framework structure but not necessarily precisely the same chemical composition.

Reference is here made to the following U.S. patents which describe various siliceous zeolites and methods of making such: 3,506,400, 3,702,886, 3,709,979, 3,829,408, 3,832,449, 3,941,871, 4,016,245, 4,046,859, 4,061,724 and 4,076,842.

Catalyst is suitably prepared by incorporating a suitable chromium compound, titanium compound and fluorine compound on the dried zeolite support, and then activating the resulting composition by heating it in air or oxygen at a temperature of 300° to 900°C, and preferably at 700° to 850°C, but not above the zeolite decomposition temperature, for at least 2 hours, and preferably for 5 to 15 hours. The chromium compound, titanium compound and fluroine compound are usually incorporated with the zeolite support from solutions thereof, e.g., by impregnation. They may also be associated with the zeolite by vapor deposition and/or co-crystallization. After the compounds are associated with the zeolite and it is activated, there results a powdery, free-flowing particulate material. 0.005 to 1 weight percent of the composite catalyst is preferably employed per pound (454 g) of polymer produced.

The order of the addition of the chromium compound, titanium compound and fluorine compound to the support is not critical provided that all of the compounds are added before the activation of the composite catalyst and the support is dried before the titanium compound is added thereto. The crystalline siliceous materials used as a support are porous materials having a high surface area, and preferably a particle size of about 0.01 to 200 microns.

The catalyst support which may have the chromium and/or fluorine compound deposited thereon is dried before it is brought into contact with the titanium compound. This is normally effected by simply heating or pre-drying the catalyst support with a dry inert gas or dry air prior to use. The preferred drying temperature is 100 to 300°C.

During activation of the supported catalyst, a stream of dry air or oxygen is preferably passed through the catalyst to aid in the displacement of the water from the catalyst. Activation temperatures of from 300°C to 900°C for a short period of 6 hours or so should be sufficient if well dried air or oxygen is used, and the temperature is not permitted to get so high as to cause sintering of the support.

When incorporated in a porous support of high surface area, the chromium forms active sites on the surface and in the pores of the support. Although the actual mechanism of the process is not entirely understood, it is believed that the polymers begin to grow at the surface as well as in the pores of the support catalyst. When a pore grown polymer becomes large enough in the fluidized bed it may rupture the support thereby exposing fresh catalyst sites in the inner pores of the support. On the other hand, some porous crystalline siliceous materials have multi-dimensional pore systems allowing for simultaneous ingress of monomer and egress of polymer without plugging. The supported catalyst may thus subdivide many times during its lifetime in the fluidized bed and thereby enhance the production of low catalyst residue polymers, thereby eliminating the need for recovering the catalyst from the polymer particles. If the support is too large, it may resist rupture thereby preventing subdivision which would result in catalyst waste. In addition, a large support may act as a heat sink and cause "hot spots" to form.

It is also possible to provide an olefin polymerization catalyst system which is a mixture of the prior art amorphous, porous, siliceous substrate supported chromium type catalyst and the instant crystalline porous siliceous zeolitic substrate supported chromium catalyst. In this embodiment, the amorphous siliceous supported catalyst system is suitable as described in aforementioned U.S. Patent No. 4,011,382, with the weight proportions of amorphous to crystalline supported catalysts preferably being 1 to 100 to 100 to 1. The proportion of catalyst to polymer may be 0.01 to 10 parts of catalyst per 100 parts of polymer.

The process of the present invention is particularly intended to produce copolymers of a major mol percent (greater than or equal to 85%) of ethylene, and a minor mol percent (1 to 15%) of one or more $C_3$ to $C_7$ alpha olefins. These alpha olefins are preferably propylene, butene-1, pentene-1 and hexene-1.

The copolymers have a density of about 0.900 to 0.925 for low density polymers and of about 0.926 to 0.940 for medium density polymers. The density of the copolymer at a given melt index level is primarily regulated by the amount of $C_3$ to $C_7$ comonomer which is copolymerized with the ethylene. In the absence of the comonomer, the ethylene would homopolymerize with the catalyst of the present invention to provide homopolymers having a density of about greater than or equal to about 0.95. Thus, the copolymerization of progressively larger amounts of the comonomers in the polymers results in a progressive lowering, sometimes in approximately linear fashion, of the density of the polymer. The amount of each of the various $C_3$ to $C_7$ comonomers needed to achieve the same result will vary from monomer to monomer, under the same reaction conditions. Thus, to achieve the same results, in terms of a given density, at a given melt index level, larger molar amounts of the comonomers would be needed in the order of $C_3 > C_4 > C_5 > C_6$.

Some of the zeolites useful as substrates for the catalyst system of this invention have pore systems which are characterized by the ability to regulate the rate of diffusion therein to certain organic compounds. Thus, by the proper selection of a particular
zeolite, it is possible to use a mixed olefin feed stream and still
limit the extent and nature of the copolymerization which is carried
out. This property also suggests the use of mixed zeolites in this
polymerization system. The product produced by using a catalyst of
mixed zeolite substrates is a mixture of polymers of somewhat
different composition. Each substrate may have a different catalyst
composition incorporated therewith thereby adding a still further
degree of freedom permitting the direct production of various types of
polymers and product compositions.

The characteristic of diffusion limitation of crystalline
siliceous molecular sieves is most helpful in permitting controlled
copolymerization of specific proportions of mixed feeds. This permits
the use of inexpensive feed streams. For example, it is conventional
practice to produce mixed olefin as an off gas from a refinery
catalytic cracker or from a steam pyrolysis unit. The conventional
practice is to resolve such mixed products into their individual
components and thence to use such components as desired, alone or in
recombined admixture. Using zeolite molecular sieve catalyst
substrates and their inherent or modified diffusional characteristics,
it is possible to use the unresolved product to produce particularly
desirable products. Thus the cost of purification is saved thereby
lowering the cost of the entire polymerization operation.

An example of the above referred to operation is the feeding
of mixtures of ethylene and propylene with linear and branched chain
butenes, pentenes, hexenes and heptenes over a catalyst comprising a
mixture of chromium, titanium and fluorine incorporated inside the
pore system of a very small particle size crystalline siliceous
material of ZSM-5 structure under appropriate polymerization
conditions. The sieving action of the crystal substrate will cause
selective copolymerization of predominantly ethylene, propylene and
principally monomethyl branched and normal butenes. The feed may of
course contain other compounds such as for example saturated
hydrocarbons and/or carbon dioxide, carbon monoxide and nitrogen.

F-1266 -10- 0075421

The copolymerization is also substantially affected by the location of the chromium, titanium and fluorine relative to the zeolite substrate. If all of the catalyst is located inside zeolite pore system, and therefore subject to the diffusivity characteristics of the zeolite, the proportion of various comonomers in the final product will be, at least to some extent, controlled. On the other hand, to the extent that the chromium, titanium and fluorine are outside the pore system, that is on the unconstrained external surface, the proportions of comonomers in the final product will more nearly reflect the proportions in the monomer mixture in total taking into account of course differing reactivity of each comonomer. Various techniques are known in the zeolite art for causing added materials, such as metals, to be deposited selectively on the external surface or in the pore system. Techniques are also known for suppressing the activity of metals deposited on the external surfaces of zeolites. Thus it is possible, by well known techniques, to provide substantially all of the active catalyst components on either the external surface or in the internal pore structure. It is equally possible to apportion the catalyst components between the external surface and the internal pore area, thereby to cause selective copolymerization from a mixed monomer feed.

In addition it is possible to apportion different catalyst components to different areas of the substrate. Thus, for example, the chromium can be placed inside the pores and the titanium placed outside the pores, or vice versa. It is contemplated by this means to vary and thus favorably to control the properties of the polymers produced.

It is common practice in the zeolite art to utilize composites of zeolite and a matrix. The matrices are usually alumina, silica-alumina, silica, titania or other refractory solids. They may or may not have catalytic activity in their own right. Thus it is also possible selectively to incorporate the various additive components of the catalyst, i.e., chromium, titanium and fluorine, variously within the zeolite or the matrix in differing proportions in order to achieve varying copolymer product distributions.  Because the catalyst and its substrate leave the polymerization zone with the polymer product, it is preferred to use particles which are as small as possible consistent with their catalytic purpose.

The melt index of a polymer is a reflection of its molecular weight.  Polymers having a relatively high molecular weight have a relatively low melt index.  Ultra-high molecular weight ethylene polymers have a high load melt index (HLMI) of about 0.0 and very high molecular weight polymers have a high load melt index (HLMI) of about 0.0 to 1.0.  Such high molecular weight polymers are difficult, if not impossible, to mold in conventional injection molding equipment.  The copolymers produced according to the process of the invention have a standard or normal load melt index of greater than 0.0 to at least 2.0, preferably of about 0.1 to 1.0, and a high load melt index (HLMI) of about 1 to about 100 and hence can be molded in convention injection molding equipment.  The melt index of these copolymers is a function of the polymerization temperature of the reaction, the composition of the polymer and the titanium content of the catalyst. Thus, the melt index is raised by increasing the polymerization temperature and/or by increasing the comonomer/ethylene ratio and/or by increasing the titanium content of the catalyst.

The copolymers made in the process of the present invention have a n-hexane extractables content (at 50°C) of less than about 12 percent, and preferably of less than about 5.5 percent.  The n-hexane extractables content is a function of the fluorine content of the catalyst.  As the fluorine content of the catalyst is increased the extractable fraction content of the polymer is lowered.  Increasing the fluorine content of the catalyst also improves the rate of incorporation of the $C_3$ to $C_7$ comonomer in the copolymer.  An increase in fluorine content, however, also tends to lower the melt index of the polymers.

The copolymers made in the process of the present invention have a residual catalyst content, in terms of parts per million of chromium metal, of the order of less than about 10 parts per million, and preferably of the order of less than about 3 parts per million.

This catalyst residue content is primarily a function of the productivity of the catalyst; that is the catalyst residue is that amount of catalyst containing sufficient chromium to polymerize the amount of polymer with which it is associated.

The copolymers made according to the process of the invention have an average particle size of the order of 0.005 to 0.06 inch (0.013 to 0.15 cm), and preferably of 0.01 to 0.05 inch (0.025 to 0.13 cm). The particle size is important for the purposes of readily fluidizing the polymer particles in a fluid bed reactor.

The copolymerization reaction is conducted by contacting a stream of the comonomers, preferably in a fluid bed reactor and substantially in the absence of catalyst poisons such as moisture, oxygen, carbon monoxide and/or acetylene, with a catalytically effective amount of the activated catalyst at a temperature and at a pressure sufficient to initiate the polymerization reaction. The catalyst can be used in the presence of up to about 200 parts per million of $CO_2$.

In order to achieve the desired density ranges in the copolymers it is necessary to copolymerize enough of the $(C_3^+)$ comonomers with ethylene to achieve a level of about 1 to 15 mol percent of the $C_3$ to $C_7$ comonomer(s) in the copolymer. The amount of comonomer needed to achieve this result will depend on the particular comonomer(s) being employed and on the fluorine content of the catalyst. Some increased fluorine content of the catalyst improves the comonomer incorporation. Further, the various intended comonomers have different reactivity rates, relative to the reactivity rate of ethylene, with respect to their copolymerization. Therefore, the amount of comonomer used in the stream of monomers fed to the reactor will also vary according to the reactivity of the comonomer.

There is provided below a list of the amount, in mols, of various comonomers that may be copolymerized with ethylene in order to provide polymers having the desired density range at any given melt index. The list also indicates the concentration, in mol %, of such comonomers which should be present in the gas stream of monomers which is fed to the reactor.

| Comonomer | Mol % in copolymer | Mol % in gas stream |
|---|---|---|
| propylene | 3.0 to 15 | 6 to 30 |
| butene-1 | 2.5 to 12 | 6 to 25 |
| pentene-1 | 2.0 to 9.0 | 4 to 18 |
| hexene-1 | 1.0 to 7.5 | 3 to 15 |

Ter and higher polymers may also be produced.

The process of the invention is preferably operated at a temperature below the sintering temperature of the polymer particles produced. For the production of the ethylene copolymers, an operating temperature of 30° to 105°C is preferred, and a temperature of 85° to 95°C is most preferred. Temperatures in the low part of the range are used to prepare products having a specific gravity of 0.900 to 0.920, and temperatures in the high part of the range are used to prepare products having a specific gravity of 0.921 to 0.940. Where a fluid bed reactor is used, it is operated at pressures of up to 1000 psi (6.9 x $10^3$ kPa), and is preferably operated at a pressure of from 150 to 350 psi (1 to 2.4 x $10^3$ kPa), with operation at the high pressures favoring heat transfer since an increase in pressure increases the unit volume heat capacity of the gas.

The stream of gaseous monomer, with or without inert gaseous diluents, is preferably fed into the reactor at a space time rate of about 2 to 10 pounds/hour/cubic foot (3 to 16 x $10^4$ g/hour/m$^3$) of bed volume. Hydrogen may be used as a chain transfer agent in the polymerization reaction in amounts varying between about 0.001 to about 10 moles of hydrogen per mole of ethylene and comonomer.

With a fluid bed reactor, the catalyst is injected into the bed, at a rate equal to its consumption, above its distribution point. Preferably, the catalyst is injected at a point located about 1/4 to 3/4 of the distance up the side of the bed. Injecting the catalyst at a point above the distribution point is preferred since the catalyst is highly active and hence injection into the area below the distribution point may cause polymerization to begin there and eventually cause plugging. Injection into the viable bed, instead, aids in distributing the catalyst throughout the bed and tends to preclude the formation of localized areas of high catalyst concentration which may result in the formation of localized areas of high catalyst concentration which may result in the formation oif "hot spots". An inert gas, such as nitrogen, may be used to carry the catalyst into the bed.

The production rate of the bed may be controlled by the rate of catalyst injection. The productivity of the bed may be increased by simply increasing the rate of catalyst injection and decreased by reducing the rate of catalyst injection. Since any change in the rate of catalyst injection will change the rate of generation of the heat of reaction, the temperature of recycle gas is adjusted upwards or downwards to accommodate the change in rate of heat generation. This ensures the maintenance of an essentially constant temperature in the bed. Complete instrumentation of both the fluidized bed and the recycle gas cooling system, is, of course, desirable to detect any temperature change in the bed so as to enable the operator to make a suitable adjustment in the temperature of the recycle gas.

Under a given set of operating conditions, the fluidized bed is maintained at a substantially constant height by withdrawing a portion of the bed as product at a rate equal to the rate of formation of the particulate polymer product. Since the rate of heat generation is directly related to the rate of product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at or close to the distribution point and in suspension with a portion of the gas stream which is vented before the particles settle to preclude further polymerization and sintering when the particles reach their ultimate collection zone. The suspending gas may also be used, as mentioned above, to drive the product of one reactor to another reactor.

The fluidized bed reactor should be equipped with an adequate venting system to allow venting the bed during start up and shut down. The reactor does not require the use of stirring means and/or wall scrapping means.

It is well known that olefin addition polymers, as well as other polymers, such as condensation polymers, pose a substantial environmental problem because they are generally not biodegradable. In fact, additives are sometimes incorporated in such polymers in order to improve their biodegradability, notably additives which make them more susceptible to degradation by action of ultraviolet light. For outdoor application, e.g. agricultural mulches, this is a viable solution to the problem of destruction of waste products. However, most polymer products end up in conventional garbage destruction systems which include chemical treatment and/or incineration. Most thermoplastic polymers are not readily adapted to incineration because they tend to melt and clog up fuel systems and they tend to be themselves less than totally flammable. Thermosetting polymers do not melt but rather char. In fact, it is the substantial inertness of polymers that strongly recommends their use in many applications.

Porous crystalline siliceous zeolite materials are, however, found to enhance the destructibility of relatively inert polymers in general, and olefin addition polymers in particular, under appropriate conditions. This is true regardless of whether these zeolites are incorporated with the polymer by using them as a polymerization catalyst substrate, or by incorporating them with a preformed polymer as a filler, or a combination thereof. Incorporation is preferably in a proportion of about 0.001 to 10 weight percent zeolite based upon polymer. Thus the zeolitic materials described herein, particularly those having the topologies (crystal structures as shown by X-ray diffraction patterns) corresponding to ZSM-4, ZSM-5, ZSM-11, ZSM-12, ZSM-20, ZSM-23, ZSM-35, ZSM-38, zeolites x and y have the ability, at elevated temperatures, to convert most organic compounds including very long chain hydrocarbons, to light aromatic and aliphatic hydrocarbons, predominantly hydrocarbons of about $C_{10}$ to $C_{12}$ and lighter. These light hydrocarbons are readily incinerable without attendant plugging and other problems normally associated with the destruction of stable polymers. This hydrocarbon conversion takes place at temperatures in the range of 200 to 250°C and higher, up to 800 to 1000°C. Pressure is not a particular factor in this conversion, nor is contact time or space velocity, since it is not particularly material which light hydrocarbons are produced only that the ones produced burn much more readily than does the polymer from which they are formed. Suitably subatmospheric to superatmospheric pressures of 10 to 3000 psia (69 to 20700 kPa) or higher are appropriate. Space velocities of about 0.1 to 100 WHSV are suitable.

It is also interesting that the olefin polymerization catalysts described herein necessarily contain chromium which is itself an excellent oxidation catalyst. Thus the supported catalyst of this invention is indeed multi-purpose: at low temperatures, of 200 to 1000°C, it catalyzes the homo and copolymerization of lower olefins; at high temperatures of about 400 to 1700°C the zeolitic substrate catalyzes the conversion of the olefin polymers to lighter, readily combustible hydrocarbons; and the chromium which helps to catalyze the lower temperature polymerization also catalyzes the higher temperature combustion. Of course other oxidation catalysts, such as platinum and the like, may be included with or instead of the chromium. Proportions of oxidation catalyst may be as low as 0.001 part per million or higher.

CLAIMS:

1. A catalyst composition for the polymerization of olefins comprising a porous crystalline siliceous material containing in catalytically active form 0.05 to 3 weight percent chromium, 1.5 to 9 weight percent titanium and up to 2.5 weight percent fluroine.

2. A composition as claimed in Claim 1 activated by heating in an oxygen-containing gas at 300-900°C.

3. A composition as claimed in Claim 1 or Claim 2 having a particle size of 0.01 to 200 microns.

4. A composition as claimed in any one of Claims 1 to 3 wherein said porous crystalline siliceous material is a zeolite.

5. A composition as claimed in any preceding Claim wherein said porous crystalline siliceous material has the topology of at least one zeolite selected from ZSM-4, ZSM-5, ZSM-11, mordenite, ZSM-12, ZSM-20, ZSM-23, ZSM-35, ZSM-38, zeolite y and zeolite x.

6. A composition as claimed in any preceding Claim wherein said porous crystalline siliceous material is in admixture with an amorphous siliceous material containing in catalytically active form 0.05 to 3 weight percent chromium, 1.5 to 9 weight percent titanium and greater than 0 to 2.5 weight percent fluorine.

7. A composition as claimed in any preceding Claim in admixture with an organic polymer.

8. A process for polymerizing olefins comprising contacting at least one polymerizable olefin with a composition as claimed in any one of Claims 1 to 6 under polymerizing conditions.

9. A process as claimed in Claim 8 wherein ethylene is copolymerized with at least one $C_3$ to $C_7$ alpha olefin.

10. A process as claimed in Claim 9 wherein the polymerization is effected in a fluid bed at a temperature of 30-105°C and a pressure up to 1000 psi (6.9 x $10^3$ kPa) to produce a copolymer containing 1-15 mol percent of said at least one $C_3$ to $C_7$ alpha olefin and having a density of 0.900 to 0.940.

European Patent
Office

**EUROPEAN SEARCH REPORT**

0075421
Application number

EP 82 30 4769

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | --- <br> US-A-4 011 382 (I.J.LEVINE AND F.J.KAROL) <br> *Claims 1-9; column 5, lines 60-63* | 1-4,6, 8-10 | C 08 F 10/00 <br> C 08 F 4/22 <br> C 08 F 2/34 |
| D,Y | --- <br> US-A-3 702 886 (R.J.ARGAUER AND G.R.LANDOLT) <br> *Claims 1-19; column 4, lines 31-47* | 1,4,5 | |
| D,Y | --- <br> US-A-4 076 842 (C.J.PLANK et al.) <br> *Claims 1-17; column 3, lines 15-19* | 1,4,5 | |
| D,Y | --- <br> US-A-4 016 245 (C.J.PLANK et al.) <br> *Claims 1-13; column 7, lines 18-22* | 1,4,5 | **TECHNICAL FIELDS SEARCHED (Int. Cl. 3)** |
| | ----- | | C 08 F 10/00 <br> C 08 F 10/02 <br> C 08 F 10/04 <br> C 08 F 10/06 <br> C 08 F 10/08 <br> C 08 F 10/10 <br> C 08 F 10/12 <br> C 08 F 10/14 <br> C 08 F 110/00 <br> C 08 F 110/02 <br> C 08 F 110/04 <br> C 08 F 110/06 <br> C 08 F 110/08 <br> C 08 F 110/10 <br> C 08 F 110/12 <br> C 08 F 110/14 <br> C 08 F 210/00 <br> C 08 F 210/02 |

The present search report has been drawn up for all claims

-/-

| Place of search <br> THE HAGUE | Date of completion of the search <br> 05-01-1983 | Examiner <br> WEBER H. |
|---|---|---|

## DOCUMENTS CONSIDERED TO BE RELEVANT

Page  2

| Category | Citation of document with indication. where appropriate, of relevant passages | Relevant to claim | CLASSIFICATION OF THE APPLICATION (Int. Cl. ³) |
|---|---|---|---|
| | | | |

TECHNICAL FIELDS SEARCHED (Int. Cl. ³)

C 08 F 210/04
C 08 F 210/06
C 08 F 210/08
C 08 F 210/10
C 08 F 210/12
C 08 F 210/14
C 08 F 210/16
C 08 F    4/22
C 08 F    4/24

The present search report has been drawn up for all claims

| Place of search | Date of completion of the search | Examiner |
|---|---|---|
| THE HAGUE | 05-01-1983 | WEBER H. |